(19) Europäisches Patentamt
European Patent Office
Office européen des brevets

(11) Veröffentlichungsnummer: **0 425 907 B1**

(12) **EUROPÄISCHE PATENTSCHRIFT**

(45) Veröffentlichungstag der Patentschrift: **28.06.95**

(51) Int. Cl.[6]: **C09B 19/02**, C09B 62/04

(21) Anmeldenummer: **90119975.2**

(22) Anmeldetag: **18.10.90**

(54) **Triphendioxazinfarbstoffe.**

(30) Priorität: **31.10.89 DE 3936183**
**01.12.89 DE 3939700**

(43) Veröffentlichungstag der Anmeldung:
**08.05.91 Patentblatt 91/19**

(45) Bekanntmachung des Hinweises auf die Patenterteilung:
**28.06.95 Patentblatt 95/26**

(84) Benannte Vertragsstaaten:
**CH DE FR GB LI**

(56) Entgegenhaltungen:
**EP-A- 0 170 838**
**EP-A- 0 361 186**
**DE-A- 4 005 551**
**FR-A- 2 095 580**

(73) Patentinhaber: **BAYER AG**

**D-51368 Leverkusen (DE)**

(72) Erfinder: **Jäger, Horst, Dr.**
**Carl-Rumpff-Strasse 37**
**W-5090 Leverkusen 1 (DE)**
Erfinder: **Henk, Hermann, Dr.**
**Roggendorfstrasse 55**
**W-5000 Köln 80 (DE)**
Erfinder: **Wild, Peter, Dr.**
**Droste-Hülshoff-Strasse 2**
**W-5068 Odenthal (DE)**

**EP 0 425 907 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aus der EP-A2 0 361 186, die ein früheres Prioritätsdatum hat, aber nachveröffentlicht ist, sind Triphendioxazin- bzw. Triphendithiazin-Direktfarbstoffe bekannt, die sich von den Farbstoffen der vorliegenden Erfindung unterscheiden.

Die vorliegende Erfindung betrifft Triphendioxazinfarbstoffe der Formel

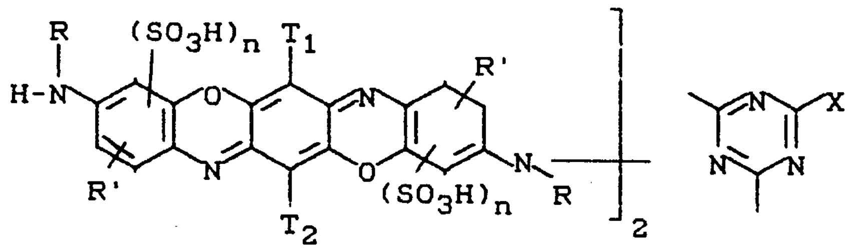

(1)

sowie ihre Verwendung zum Färben und Bedrucken von cellulosehaltigen Materialien und Leder.

In (1) bedeutet

R = Wasserstoff oder gegebenenfalls substituiertes $c_1$-$C_4$-Alkyl

R' = Wasserstoff, Halogen, $C_1$-$C_4$-Alkyl, $C_1$-$C_4$-Alkoxy oder COOH,

$T_1$, $T_2$ = Wasserstoff, Chlor, Brom, gegebenenfalls substituiertes $C_1$-$C_4$-Alkyl, $C_1$-$C_4$-Alkoxy, Phenyl oder Phenoxy,

X = Wasserstoff, $SO_3H$, $C_1$-$C_4$-Alkyl oder eine Thioether-Gruppe der Formel -S-$R_1$ mit $R_1$ = gegegebenenfalls durch Hydroxy, $C_1$-$C_4$-Alkoxy, Sulfato, Sulfo, Carboxy oder Phenyl substituiertes $C_1$-$C_4$-Alkyl oder gegebenenfalls durch Nitro, Sulfo oder Carboxy substituiertes Phenyl oder

X = eine Ethergruppe der Formel -O-$R_2$ mit $R_2$ = Wasserstoff oder $R_1$ oder

X = eine Aminogruppe der Formel -N $R_3$ $R_4$ mit $R_3$ = gegebenenfalls durch Sulfato, $C_1$-$C_4$-Alkoxy, Sulfo, Carboxy oder Phenyl substituiertem $C_1$-$C_4$-Alkyl oder Cyclohexyl und

$R_4$ = gegebenenfalls durch $C_1$-$C_4$-Alkoxy, Sulfato, Sulfo oder Carboxy substituiertem $C_1$-$C_4$-Alkyl oder durch Hydroxy, Carboxy, $C_1$-$C_4$-Alkyl oder $C_1$-$C_4$-Alkoxy substituiertem Phenyl oder durch Phenyl oder Naphthyl substituiertem $C_1$-$C_4$-Alkyl oder Hydroxyl oder $C_1$-$C_4$-Alkoxy oder einer gegebenenfalls durch Phenyl oder $C_1$-$C_4$-Alkyl substituierter Aminogruppe oder

X = eine Aminogruppe der Formel

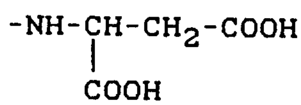

oder $-NH-CH_2-CH_2-COOH$

oder $N(C_2H_5)C_6H_5$

und

n = 0 oder 1.

Wenn n = 1, steht die Sulfogruppe in o-Stellung zum Substituenten -NHR bzw.

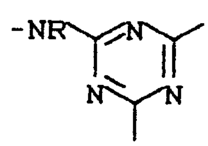

Beispiele für R sind: $CH_3$, $C_2H_5$, n-$C_3H_7$, i-$C_3$-$H_7$, n-$C_4H_9$, die beispielsweise durch OH, $OCH_3$, $OC_2H_5$, COOH, $SO_3H$, $OSO_3H$, CN, Cl substituiert sein können.

Substituenten der gegebenenfalls substituierten $C_1$-$C_4$-Alkyl- und $C_1$-$C_4$-Alkoxyreste $T_1$ bzw. $T_2$ sind beispielsweise $C_1$-$C_4$-Alkoxy oder $OSO_3H$.

Substituenten der gegebenenfalls substituierten Phenyl- und Phenoxyreste $T_1$ bzw. $T_2$ sind beispielsweise Cl, Br, $C_1$-$C_4$-Alkyl, $C_1$-$C_4$-Alkoxy und $SO_3H$.

Soweit der Substituent R' Halogen bedeutet ist Cl bevorzugt.

Soweit der Substituent X $C_1$-$C_4$-Alkyl bedeutet, ist Methyl, Ethyl, n-Propyl, i-Propyl, n-Butyl und t-Butyl bevorzugt.

Im Rahmen der Formel (1) bevorzugte Farbstoffe entsprechen der Formel

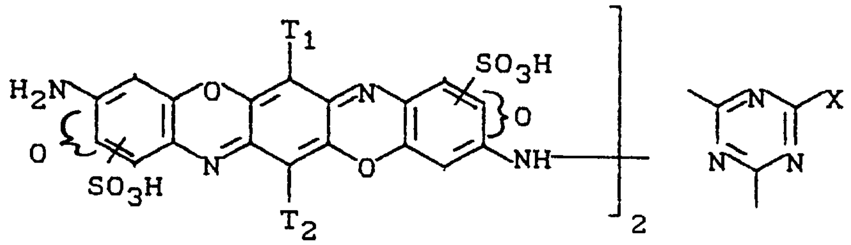

(2)

worin $T_1$, $T_2$ und X die angegebene Bedeutung haben. Weiterhin sind Farbstoffe der Formeln (1) oder (2) bevorzugt, in denen $T_1$, $T_2$ = Cl oder $OCH_3$.

Bevorzugt stellt X eine Sulfogruppe oder einen Rest der Formel -S-$R_1$ oder -O-$R_2$ dar, in welchen $R_1$ bevorzugt einen Phenylrest, der durch Nitro substituiert sein kann, oder einen $C_1$-$C_4$-Alkylrest, der durch Hydroxy oder Carboxy substituiert sein kann, bedeutet und $R_2$ bevorzugt ein Wasserstoffatom oder ein $C_1$-$C_4$-Alkylrest oder ein Phenylrest ist, der durch Sulfo oder Carboxy substituiert sein kann. Der Formelrest X bedeutet weiterhin bevorzugt eine Aminogruppe der Formel -$NR_3R_4$, in welcher $R_3$ bevorzugt eine niedere $C_1$-$C_4$-Alkylgruppe bedeutet, die durch eine Carboxy- oder Sulfogruppe substituiert sein kann und in welcher $R_4$ bevorzugt eine $C_1$-$C_4$-Alkylgruppe bedeutet, die durch eine Sulfato-, Carboxy-, Sulfo- oder $C_1$-$C_4$-Alkoxy-Gruppe substituiert sein kann.

Beispiele für bevorzugte Reste X sind;

$OCH_3$, $OC_2H_5$, $OCH_2CH_2OCH_3$, $SO_3H$, $SCH_2COOH$, $SCH_2CH_2OH$, $N(CH_3)_2$, $N(C_2H_5)_2$,

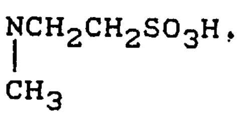 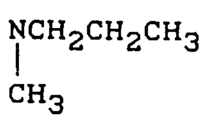 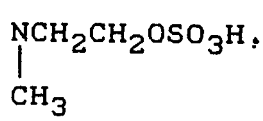 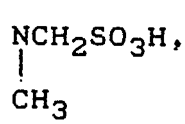

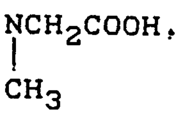

$N(C_2H_4OSO_3H)_2$,

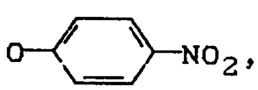 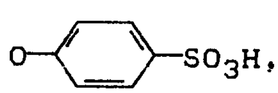 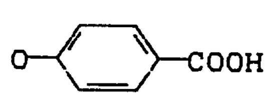

Gegenstand der Erfindung ist weiterhin ein Verfahren zur Herstellung der Farbstoffe der Formel (1). Es ist dadurch gekennzeichnet, daß man 1 Mol eines Triphendioxazinfarbstoffs der Formel

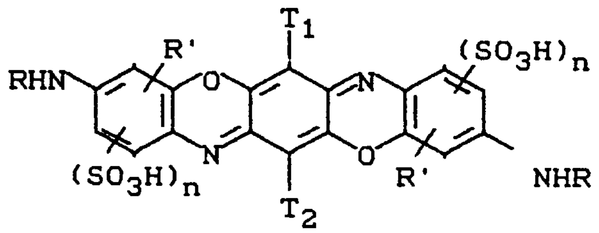

(3)

worin $T_1$, $T_2$, R, R' und n die angegebene Bedeutung haben, mit 1 Mol eines Halogentriazins der Formel

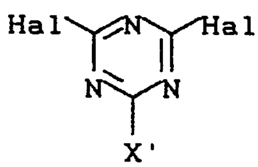

(4)

worin Hal für Chlor, Brom oder Fluor steht und X' die bei X angegebene Bedeutung hat oder Halogen bedeutet, zu einem Monoacylierungsprodukt der Formel

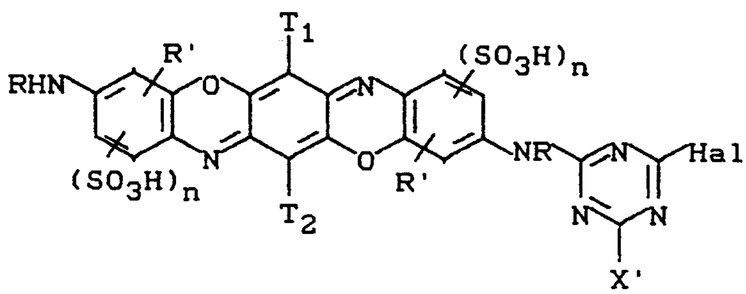

(5)

umsetzt und dieses dann mit einem weiteren Mol eines Triphendioxazinfarbstoffs der Formel (3) zu einem Farbstoff der Formel (1) kondensiert.

Die Kondensation der Farbstoffe (3) mit den Halogentriazinen (4) erfolgt vorzugsweise im wäßrigen oder wäßrig-organischen Medium und in Abhängigkeit von der Reaktivität des Halogentriazins bei Temperaturen von 0° C bis 40°C, wobei gegebenenfalls die bei der Kondensation freiwerdende Halogenwasserstoffsäure durch Zugabe von säurebindenden Mitteln abgefangen wird.

Die weitere Kondensation der Monoacylierungsprodukte (5) mit einem Farbstoff (3) wird gleichfalls in wäßrigem oder wäßrig-organischem Medium bei Temperaturen von 20°C bis 100°C ausgeführt, wobei der bei der Kondensation freiwerdende Halogenwasserstoff gegebenenfalls durch Zugabe von säurebindenden Mitteln neutralisiert wird. Säurebindende Mittel sind insbesondere die Alkali- oder Erdalkalihydrogencarbonate, -carbonate, -hydroxide, - phosphate oder -borate.

Wenn X' in den Halogentriazinen der Formel (4) für Halogen steht, so wird in einer weiteren Kondensationsreaktion X' gegen Ether-, Thioether- oder Aminreste der Formel $-OR_2$, $-SR_1$ oder $-NR_3R_4$ ausgetauscht.

Diese Kondensation wird ebenfalls im wäßrigen oder wäßrig-organischen Medium bei Temperaturen von 60°C bis 100°C ausgeführt, wobei der bei der Kondensation freiwerdende Halogenwasserstoff durch Zugabe von säurebindenden Mitteln neutralisiert wird. Säurebindende Mittel sind neben den obengenannten Alkali- oder Erdalkaliverbindungen auch Amine der Formel $NHR_3R_4$ (6), die im Überschuß eingesetzt werden. Daneben können auch tertiäre Amine wie Triethylamin oder Pyridinbasen wie Pyridin, Picoline oder Chinolin verwendet werden.

Eine bevorzugte Herstellungsmethode besteht darin, daß man Farbstoffe (3) mit Cyanurchlorid zu Farbstoffen (5) mit X' = Cl kondensiert und dann X = Cl gegen Reste $OR_2$, $SR_1$ oder $NR_3R_4$ austauscht.

Für die Kondensationsreaktionen werden die Triphendioxazinfarbstoffe (3) vorzugsweise in Form ihrer neutralen Alkalisalze insbesondere ihrer Lithiumsalze eingesetzt.

Farbstoffe der Formel (3) sind aus der Literatur bekannt. So ist beispielsweise ihre Herstellung in der Europäischen Patentschrift 170 838 beschrieben.

Beispiele für Halogentriazine (4) sind:
2,4,6-Trichlortriazin (Cyanurchlorid)
2,4,6-Trifluortriazin
2,4,6-Tribromtriazin
2-Methyl-4,6-dichlortriazin
2-β-Methoxyethoxy-4,6-dichlortriazin.
2-Methoxy-4,6-dichlortriazin.

Eine bevorzugte Bedeutung hat Cyanurchlorid. Verbindungen der Formel $HOR_2$ (7), $HSR_1$ (8) und $HNR_3R_4$ (6) sind beispielsweise folgende

Alkohole $HOR_2$:
Methanol, Ethanol, Isopropanol, β-Methoxyethanol, β-Ethoxyethanol, Glykolsäure;
Phenole $HOR_2$:
Phenol, 4-Nitrophenol, 4-Sulfophenol, 4-Carboxyphenol, Salicylsäure;
Alkylmercaptane $HSR_1$:
Mercaptoethanol, Mercaptoessigsäure, β-Mercaptopropionsäure, 1-Mercapto-2-hydroxypropan, 1-Hydroxy-2-mercaptopropan;
Arylmercaptane $HSR_1$:
Thiophenol, 4-Nitrothiophenol, 4-Sulfothiophenol, 4-Carboxythiophenol;
aliphatische Amine $HNR_3R_4$:
Diethylamin, Methyltaurin, N-Methyl-β-sulfatoethylamin,
Bis-(β-methoxyethyl)-amin,
Sarkosin, β-Aminopropionsäure, Aminobernsteinsäure, Diethylentriamin, Triethylentetramin, Tetraethylenpentamin, Pantaethylenhexamin;
aromatische Amine $HNR_3R_4$:
N-Ethylanilin,
araliphatische Amine $HNR_3R_4$:
N-Methyl-benzylamin;
Die Farbstoffe werden z.B. nach Zugabe von Salz isoliert und getrocknet. Es können aber auch die Kondensationslösungen oder Suspensionen über einen Walzen- oder Sprühtrockner geführt werden.

Ebensogut können aus den feuchten Pasten der Farbstoffe konzentrierte, wäßrige Lösungen hergestellt werden, z.B. indem man Suspensionen oder Lösungen dieser Farbstoffe in Wasser einer Entsalzung, z.B. durch Druckpermeation unterwirft.

Die Farbstoffe färben cellulosehaltige Materialien, insbesondere Papier, Baumwolle und Viskose sowie Leder in blauen Tönen mit guten Haß- und Lichtechtheiten.

Die Farbstoffe können nach allen in der Papier- und Textilindustrie für substantive Farbstoffe gebräuchlichen Verfahren verwendet werden, insbesondere in der Massen- wie in der Oberflächenfärbung von Papier für geleimte und ungeleimte Sorten, ausgehend von gebleichten oder ungebleichten Zellstoff verschiedener Provenienz wie Nadel- oder Laubholz-sulfit- und/oder -sulfat-Zellstoff. Sie können auch in der Garn- und Stückfärberei von Baumwolle, Viskose und Leinen nach dem Ausziehverfahren aus langer Flotte oder in Kontinueverfahren angewandt werden.

Die mit den erfindungsgemäßen Farbstoffen erhaltenen Papierfärbungen zeichnen sich durch gute Licht- und Naßechtheit (Ausblutechtheit) aus. Auch auf die Brillanz und Klarheit der Farbtöne ist hinzuweisen. Ferner ist das Kombinationsverhalten mit geeigneten Farbstoffen sehr gut.

Bei den Temperaturangaben in den Beispielen handelt es sich um °C. Die Formeln der wasserlöslichen Farbstoffe in der Beschreibung und in den Beispielen sind die der freien Säuren. Isoliert und angewandt werden die Farbstoffe im allgemeinen in Form ihrer Alkalisalze, insbesondere der Lithium-, Natrium- oder Kaliumsalze.

Die in den Beispielen angegebenen Farbkennzahlen beziehen sich auf Colour Index Hue Indication Chart (Indicator Numbers).

Die in den folgenden Beispielen angegebenen Formeln beziehen sich auf jeweils eines der bei der Umsetzung entstehenden isomeren Reaktionsprodukte, wobei bezüglich der Substituenten in den beiden äußeren aromatischen Ringen des Triphendioxazin-Systems der isomeren Reaktionsprodukte auf das unter Formel (1) gesagte verwiesen wird.

Beispiel 1 (nicht erfindungsgemäß)

0,1 Mol 2,9-Diamino-6,13-dichlor-triphendioxazindisulfonsäure (erhalten nach Beispiel 1 der Europäischen Patentschrift 170 838) werden in 1,5 l Wasser angerührt und mit Lithiumhydroxid neutralisiert, wobei der Farbstoff in Lösung geht. Man setzt dann 500 g Eis zu, streut 0,05 Mol Cyanurchlorid ein und rührt bei 0 °C bis 5 °C bis ca. 50 % des eingesetzten Triphendioxazins acyliert sind. Während der Acylierung hält man durch Zutropfen von Lithiumhydroxydlösung den pH zwischen 6 und 7, Anschließend erwärmt man auf 60 bis 70 °C, wobei der Austausch des zweiten Chloratoms erfolgt.

Auch hier wird der freiwerdende Chlorwasserstoff mit Lithiumhydroxidlösung neutralisiert. Der in Lösung vorliegende Farbstoff hat die für Beispiel 1 angegebene Konstitution. Durch Zusatz von 4 Volumen-% Natriumchlorid wird der Farbstoff abgeschieden. Nach dem Absaugen, Trocknen und Mahlen erhält man ein in Wasser mit klarer blauen Farbe lösliches Farbstoffpulver, das Baumwolle nach einem der für substantive Farbstoffe üblichen Färbeverfahren in klaren rotstichig blauen Tönen färbt (Farbkennzahl 13).

Beispiel 2

Man versetzt die Lösung des nach Beispiel 1 erhaltenen Monochlortriazinfarbstoffs mit 0,15 Mol N-Methyltaurin und erwärmt auf 85 °C bis 95 °C, wobei der pH zwischen 7,5 und 9,5 liegen soll, bis der Austausch des Chloratoms gegen den Aminrest erfolgt ist. Der Farbstoff wird durch Zugabe von 4 Volumen-% Natriumchlorid ausgesalzen. Nach dem Absaugen, Trocknen und Mahlen erhält man ein in Wasser mit klarer blauer Farbe lösliches Farbstoffpulver, das Baumwolle nach einem der für substantive Farbstoffe üblichen Färbeverfahren in klaren rotstichig blauen Tönen färbt (Farbkennzahl 13). Der Farbstoff hat die für Beispiel 2 angegebene Konstitution.

Ersetzt man in Beispiel 2 N-Methyltaurin durch die äquimolare Menge eines der nachfolgend aufgeführten Amine, so erhält man gleichfalls wertvolle substantive Farbstoffe, die Cellulosefasern enthaltendes Material in klaren Blautönen färbt (Farbkennzahl 13).

Beispiel 3

Schwefelsäure-mono-(2-methylaminoethylester)

Beispiel 4

Methylaminoessigsäure

Beispiel 5

β-Aminopropionsäure

Beispiel 6

Bis-(2-sulfatoethyl)-amin

Beispiel 7

Man versetzt die Lösung des nach Beispiel 1 erhaltenen Monochlortriazinfarbstoffs mit 0,15 Mol Mercaptoethanol und erwärmt auf 80 °C bis 85 °C, wobei man durch Zutropfen von verdünnter Lithiumhydroxydlösung den pH zwischen 7,5 und 8,5 hält. Nach beendeter Kondensation wird der Farbstoff durch Zugabe von 2 Volumen-% Natriumchlorid ausgesalzen. Nach dem Absaugen, Trocknen und Mahlen erhält man ein blaues Farbstoffpulver, das Cellulosefasern enthaltendes Material in klaren Blautönen färbt (Farbkennzahl 13).

Beispiel 8

Ersetzt man in Beispiel 7 Mercaptoethanol durch eine äquimolare Menge Mercaptoessigsäure und verfährt wie in Beispiel 7 angegeben, so erhält man gleichfalls einen Farbstoff, der Cellulose fasern enthaltendes Material in einem klaren Blau färbt (Farbkenn zahl 13).

In der nachfolgenden Tabelle sind die Farbstoffkonstitutionen der Beispiele 1 bis 8 angegeben:

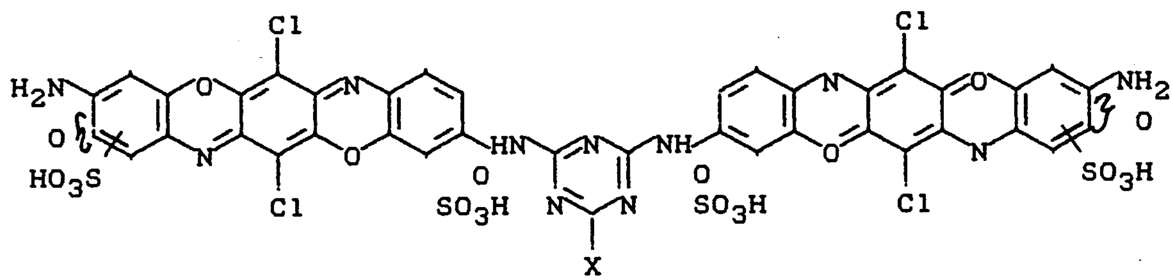

| Beispiel | X |
|---|---|
| 1 | Cl |
| 2 | $CH_3-N-CH_2CH_2OSO_3H$ |
| 3 | $CH_3-N-CH_2CH_2OSO_3H$ |
| 4 | $CH_3-N-CH_2COOH$ |
| 5 | $H_2N-CH_2CH_2COOH$ |
| 6 | $-N$ $CH_2CH_2OSO_3H$ <br> $CH_2CH_2OSO_3H$ |
| 7 | $-SCH_2CH_2OH$ |
| 8 | $-SCH_2COOH$ |

Ersetzt man in Beispiel 1 2,9-Diamino-6,13-dichlortriphendioxazindisulfonsäuredurch die äquimolare Menge 2,9-Diamino-6,13-dimethoxy-triphendioxazindisulfonsäure oder 2,9-Diamino-6,13-diethoxy-triphendioxazindisulfonsäure und verfährt im übrigen wie bei den Beispielen 1 bis 8 angegeben, so erhält man gleichfalls substantive Farbstoffe, die Cellulosefasern enthaltendes Material in klaren stark rotstichig blauen Tönen färben.

## Patentansprüche

1. Triphendioxazinfarbstoffe der Formel

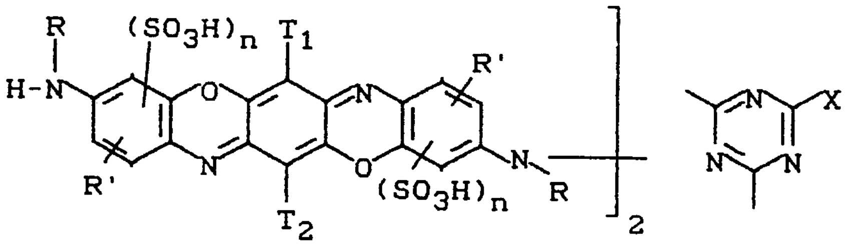

(1),

worin

R = Wasserstoff oder gegebenenfalls substituiertes $C_1$-$C_4$-Alkyl,

R' = Wasserstoff, Halogen, $C_1$-$C_4$-Alkyl, $C_1$-$C_4$-Alkoxy oder COOH

$T_1$, $T_2$ = Wasserstoff, Chlor, Brom, gegebenenfalls substituiertes $C_1$-$C_4$-Alkyl, $C_1$-$C_4$-Alkoxy, Phenyl oder Phenoxy,

X = Wasserstoff, $SO_3H$, $C_1$-$C_4$-Alkyl oder eine Thioether-Gruppe der Formel -S-$R_1$ mit $R_1$ = gegebenenfalls durch Hydroxy, $C_1$-$C_4$-Alkoxy, Sulfato, Sulfo, Carboxy oder Phenyl substituiertes $C_1$-$C_4$ Alkyl oder gegebenenfalls durch Nitro, Sulfo oder Carboxy substituiertes Phenyl oder

X = eine Ethergruppe der Formel -O-$R_2$ mit $R_2$ = Wasserstoff oder $R_1$ oder

X = eine Aminogruppe der Formel -N $R_3$ $R_4$ mit $R_3$ = gegebenenfalls durch Sulfato, $C_1$-$C_4$ Alkoxy, Sulfo, Carboxy oder Phenyl substituiertem $C_1$-$C_4$-Alkyl oder Cyclohexyl und

$R_4$ = gegebenenfalls durch $C_1$-$C_4$-Alkoxy, Sulfato, Sulfo oder Carboxy substituiertem $C_1$-$C_4$-Alkyl oder durch Hydroxy, Carboxy, $C_1$-$C_4$-Alkyl oder $C_1$-$C_4$-Alkoxy substituiertem Phenyl oder durch Phenyl oder Naphthyl substituiertem $C_1$-$C_4$-Alkyl oder Hydroxyl oder $C_1$-$C_4$-Alkoxy oder einer gegebenenfalls durch Phenyl oder $C_1$-$C_4$-Alkyl substituierter Aminogruppe oder

X = eine Aminogruppe der Formel

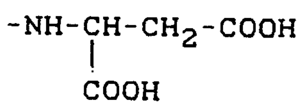

oder -NH-$CH_2$-$CH_2$-COOH
oder $N(C_2H_5)C_6H_5$ oder

X = ein Rest von Diethylentriamin, Triethylentetramin, Tetraethylenpentamin oder Pentaethylenhexamin und

n = Null oder 1

bedeutet.

2. Farbstoffe des Anspruchs 1 der Formel

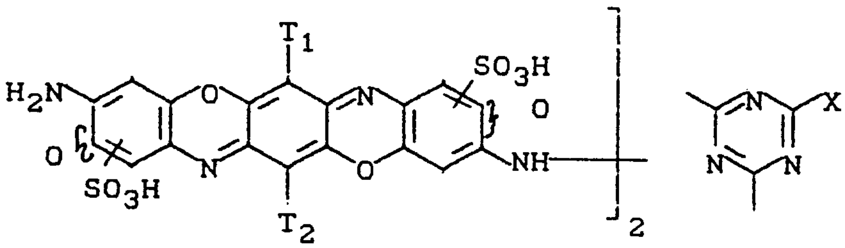

(2),

in der
$T_1$, $T_2$ und X die in Anspruch 1 angegebene Bedeutung hat.

**3.** Farbstoffe der Ansprüche 1 und 2 mit $T_1 = T_2 = Cl$ oder $OCH_3$.

**4.** Verfahren zur Herstellung der Farbstoffe des Anspruchs 1, dadurch gekennzeichnet, daß man 1 Mol eines Triphendioxazinfarbstoffs der Formel

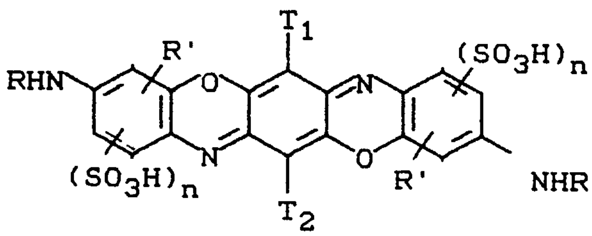

(3),

worin $T_1$, $T_2$, R, R' und n die in Anspruch 1 angegebene Bedeutung haben, mit 1 Mol eines Halogentriazins der Formel

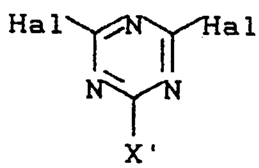

(4)

worin Hal für Chlor, Brom oder Fluor steht und X' die bei X in Anspruch 1 angegebene Bedeutung hat oder für Halogen steht, zu einem Monoacylierungsprodukt der Formel

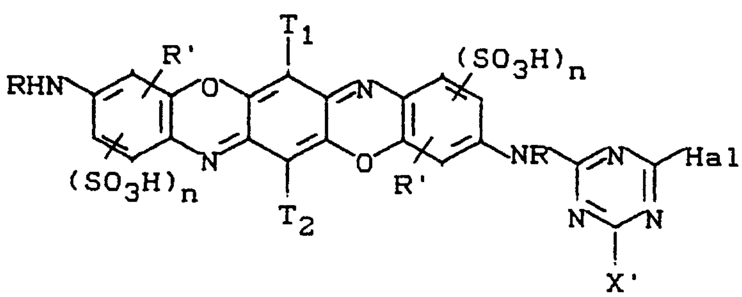

(5)

umsetzt und dieses dann mit einem weiteren Mol eines Triphendioxazinfarbstoffs der Formel (3) zu einem Farbstoff der Formel (1) kondensiert, wobei man im Falle X' = Halogen X' in einer weiteren Kondensationsreaktion gegen Ether-, Thioether- oder Aminreste der Formeln $-OR_2$, $-SR_1$ oder $-NR_3R_4$ austauscht.

**5.** Verwendung der Farbstoffe der Ansprüche 1 bis 3 zum Färben und Bedrucken cellulosehaltiger Materialien und Leder.

**6.** Verfahren nach Anspruch 4, dadurch gekennzeichnet, daß die Triphendioxazinfarbstoffe (3) für die Kondensationsreaktion in Form ihrer neutralen Lithiumsalze eingesetzt werden.

**7.** Verbindung erhältlich aus der Umsetzung von 0,1 Mol 2,9-Diamino-6,13-dichlor-triphendioxazindisulfonsäure angerührt in Wasser und neutralisiert mit Lithiumhydroxid unter Lösung des Farbstoffes, Zusatz von Eis, Zugabe von 0,05 Mol Cyanurchlorid, Rühren bei 0 °C bis 5 °C, bis ca. 50 % des eingesetzten Triphendioxazins acyliert sind und Einhalten eines pH-Wertes zwischen 6 und 7 während der Acylierung durch Zutropfen von Lithiumhydroxidlösung.

**Claims**

**1.** Triphendioxazine dyestuffs of the formula

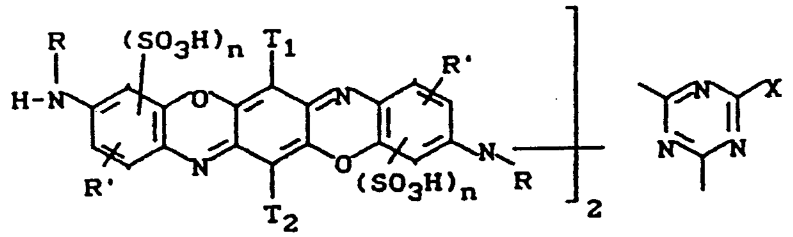
(1),

in which

R denotes hydrogen or substituted or unsubstituted $C_1$-$C_4$-alkyl,

R' denotes hydrogen, halogen, $C_1$-$C_4$-alkyl, $C_1$-$C_4$-alkoxy or COOH

$T_1$, $T_2$ denote hydrogen, chlorine, bromine, substituted or unsubstituted $C_1$-$C_4$-alkyl, $C_1$-$C_4$-alkoxy, phenyl or phenoxy,

X denotes hydrogen, $SO_3H$, $C_1$-$C_4$-alkyl or a thio-ether group of the formula -S-$R_1$ where $R_1$ is unsubstituted or hydroxyl-, $C_1$-$C_4$-alkoxy-, sulphato-, sulpho-, carboxyl- or phenyl-substituted $C_1$-$C_4$-alkyl or unsubstituted or nitro-, sulpho- or carboxyl-substituted phenyl, or

X denotes an ether group of the formula -O-$R_2$ where $R_2$ is hydrogen or $R_1$, or

X denotes an amino group of the formula -N $R_3$ $R_4$ where $R_3$ is unsubstituted or sulphato-, $C_1$-$C_4$-alkoxy-, sulpho-, carboxyl- or phenyl-substituted $C_1$-$C_4$-alkyl or cyclohexyl, and

$R_4$ is unsubstituted or $C_1$-$C_4$-alkoxy-, sulphato-. sulpho- or carboxyl-substituted $C_1$-$C_4$-alkyl or unsubstituted or hydroxyl-, carboxyl-, $C_1$-$C_4$-alkyl- or $C_1$-$C_4$-alkoxy-substituted phenyl or phenyl-or naphthyl-substituted $C_1$-$C_4$-alkyl or hydroxyl or $C_1$-$C_4$-alkoxy or a phenyl- or $C_1$-$C_4$-alkyl-substituted amino group, or

X denotes an amino group of the formula
or $-NH-CH_2-CH_2-COOH$
or $N(C_2H_5)C_6H_5$, or

X denotes a radical of diethylenetriamine, triethylenetetramine, tetraethylenepentamine or pentaethylenehexamine, and

n denotes zero or 1.

**2.** Dyestuffs of Claim 1 of the formula

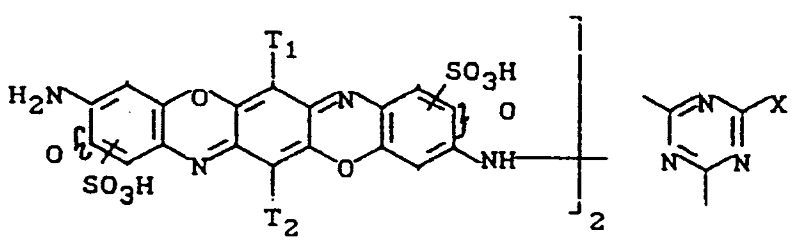
(2),

in which

$T_1$, $T_2$ and X has the meaning given in Claim 1.

**3.** Dyestuffs of Claims 1 and 2, where $T_1$ is $T_2$ and $T_2$ is Cl or $OCH_3$.

**4.** Process for preparing the dyestuffs of Claim 1, characterized in that 1 mol of a triphendioxazine dyestuff of the formula

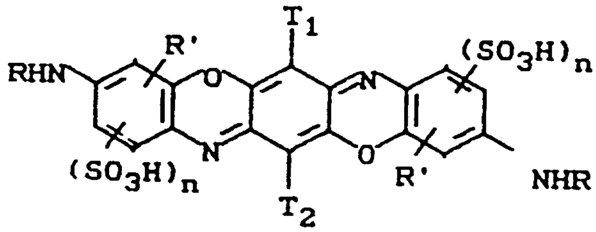

(3),

in which $T_1$, $T_2$, R, R' and n have the meaning given in Claim 1 is reacted with 1 mol of a halogenotriazine of the formula

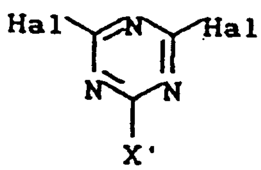

(4)

in which Hal represents chlorine, bromine or fluorine and X' has the meaning given in Claim 1 under X or represents halogen, to give a monoacylation product of the formula

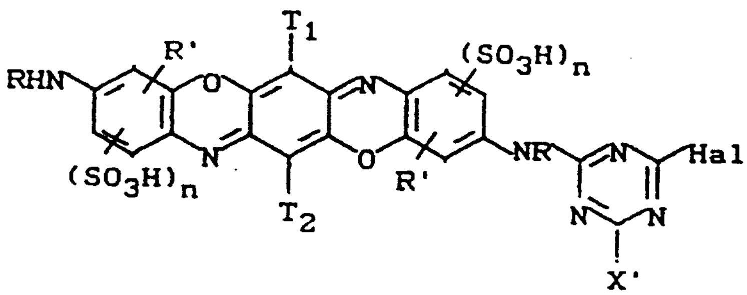

(5)

which is then condensed with a further mole of a triphendioxazine dyestuff of the formula (3) to give a dyestuff of the formula (1) where, if X' is halogen, X' is exchanged in a further condensation reaction for ether, thio-ether or amine radicals of the formulae $-OR_2$, $-SR_1$ or $-NR_3R_4$.

5. Use of the dyestuffs of Claims 1 to 3 for dyeing and printing cellulose-containing materials and leather.

6. Process according to Claim 4, characterized in that the triphendioxazine dyestuffs (3) are used for the condensation reaction in the form of their neutral lithium salts.

7. Compound obtainable by reaction of 0,1 mol of 2,9-diamino-6,13-dichloro-triphendioxazinedisulphonic acid, which is stirred in water and neutralized with lithium hydroxide, resulting in dissolution of the dyestuff, followed by addition of ice, addition of 0,05 mol cyanuric chloride, stirring at 0 °C to 5 °C until about 50% of the triphendioxazine used has been acylated and maintaining the pH during acylation between 6 and 7 by dropwise addition of lithium hydroxide solution.

## Revendications

1. Colorants de triphényldioxazine de formule :

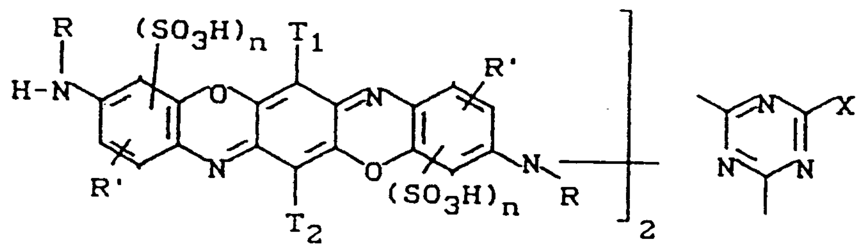

(1),

dans laquelle
R = un hydrogène ou un alkyle $C_1$-$C_4$ éventuellement substitué
R' = un hydrogène, un halogène, un alkyle $C_1$-$C_4$, un alcoxy $C_1$-$C_4$ ou COOH
$T_1$, $T_2$ = un hydrogène, un chlore, un brome, un alkyle $C_1$-$C_4$, un alcoxy $C_1$-$C_4$, un phényle ou un phénoxy substitué le cas échéant,
X = un hydrogène, un $SO_3H$, un alkyle $C_1$-$C_4$ ou un groupe thioéther de formule -S-$R_1$ avec $R_1$ = un alkyle $C_1$-$C_4$ substitué le cas échéant par un hydroxy, un alcoxy $C_1$-$C_4$, un sulfato, un sulfo, un carboxy ou un phényle ou un phényle substitué le cas échéant par un nitro, un sulfo ou un carboxy ou
X = un groupe éther de formule -O-$R_2$ avec $R_2$ = hydrogène ou $R_1$ ou
X = un groupe amino de formule -$NR_3R_4$ avec $R_3$ = un alkyle $C_1$-$C_4$ ou un cyclohexyle substitué le cas échéant par un sulfato, un alcoxy $C_1$-$C_4$, un sulfo, un carboxy ou un phényle et
$R_4$ = un alkyle $C_1$-$C_4$ substitué le cas échéant par un alcoxy $C_1$-$C_4$, un sulfato, un sulfo ou un carboxy ou un phényle substitué par un hydroxy, un carboxy, un alkyle $C_1$-$C_4$ ou un alcoxy $C_1$-$C_4$ ou un alkyle $C_1$-$C_4$ substitué par un phényle ou un naphtyle ou un hydroxyle ou un alcoxy $C_1$-$C_4$ ou un groupe amino substitué le cas échéant par un phényle ou un alkyle $C_1$-$C_4$ ou X = un groupe amino de formule

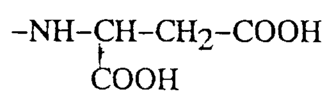

ou -NH-$CH_2$-$CH_2$-COOH
ou $N(C_2H_5)C_6H_5$ ou
X = un reste de diéthylènetriamine, de triéthylènetétramine, de tétraéthylènepentamine ou de pentaéthylènehexamine et
n = 0 ou 1.

2. Colorants selon la revendication 1, de formule :

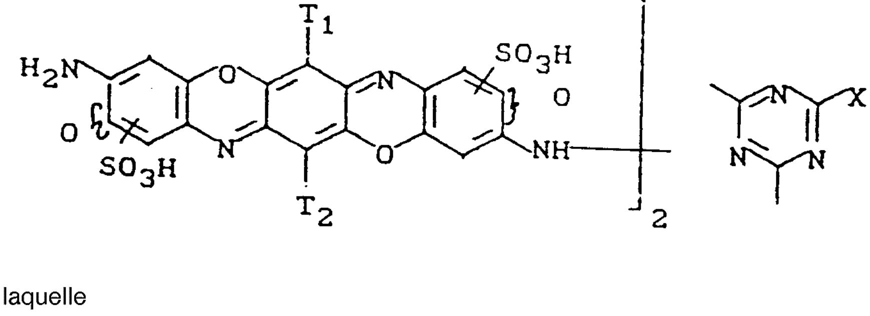

(2).

dans laquelle
$T_1$, $T_2$ et X ont les significations données à la revendication 1.

3. Colorants selon les revendications 1 et 2 avec $T_1$ = $T_2$ = Cl ou $OCH_3$.

4. Procédé de préparation des colorants de la revendication 1, caractérisé en ce qu'on fait réagir 1 mole d'un colorant de triphényldioxazine de formule :

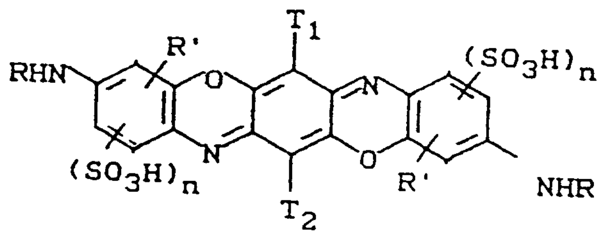

(3),

dans laquelle
$T_1$, $T_2$, R, R' et n ont les significations données à la revendication 1, avec 1 mole d'une halogénotriazine de formule :

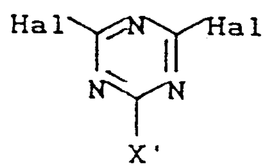

(4)

dans laquelle Hal est le chlore, le brome ou le fluor et X' a les significations données pour X à la revendication 1 ou représente un halogène, pour donner un produit monoacylé de formule :

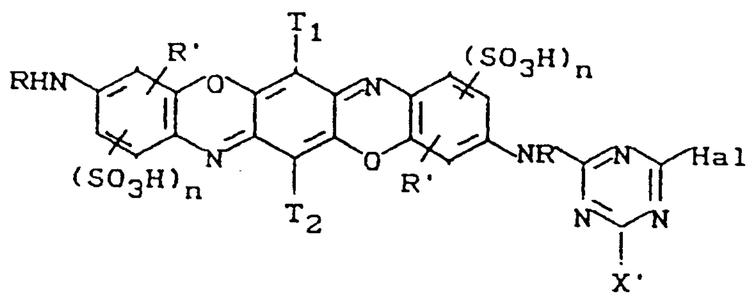

(5)

et on condense celui-ci avec une autre mole d'un colorant de triphényldioxazine de formule (3) pour donner un colorant de formule (1), et si X' = un halogène, on remplace X' dans une autre réaction de condensation par des restes éther, thioéther ou amino de formules $-OR_2$, $-SR_1$ ou $-NR_3R_4$.

5. Utilisation des colorants des revendications 1 à 3 pour teindre et imprimer des matériaux contenant de la cellulose et du cuir.

6. Procédé selon la revendication 4, caractérisé en ce qu'on utilise les colorants de triphényldioxazine (3) dans la réaction de condensation sous forme d'un de leurs sels neutres de lithium.

7. Composé qu'on peut obtenir par réaction de 0,1 mol d'acide 2,9-diamino-6,13-dichlorotriphényldioxazinedisulfonique mélangé dans l'eau et neutralisé par de l'hydroxyde de lithium et mise en solution du colorant, addition de glace, addition de 0,05 mol de chlorure de cyanuryle, agitation entre 0 °C et 5 °C jusqu'à ce qu'on acyle environ 50 % de la triphényldioxazine mise en oeuvre et en maintenant le pH entre 6 et 7 pendant l'acylation par addition goutte à goutte de solution d'hydroxyde de lithium.